# EUROPEAN PATENT SPECIFICATION

(11) **EP 1 932 660 B1**
(45) Date of publication and mention of the grant of the patent: **14.04.2010**
(21) Application number: 07464008.7
(22) Date of filing: 10.12.2007
(51) Int. Cl.: B32B 11/10, E01C 7/18, E01C 11/16

(54) **Multi-reinforced termo-adhesive composite bituminous membrane, with elastoplastomers for hydroisolated and reinforced road surfacing**
Mehrfach verstärkte thermohaftende Verbundwerkstoff-Bitumenmembran mit Elastoplastomeren für einen Wasser abweisenden und verstärkten Straßenbelag
Membrane bitumineuse thermo-adhésive multirenforcée avec élastoplastomères pour revêtement routier hydro-isolé et renforcé

(30) Priority: 11.12.2006 RO 200600960
(43) Date of publication of application: 18.06.2008
(73) Proprietor: SC Arcon SRL, 520009 Sfantu Gheorghe, Covasna (RO)
(72) Inventor: Titeiu, Ioan, Sfantu Gheorghe, Covasna (RO); Leahu, Cristian Andrei, Sfantu Gheorghe, Covasna (RO)
(74) Representative: Stanciu, Adelina

(56) References cited:
- EP-A- 1 035 269
- GB-A- 2 185 500
- US-A- 4 464 427
- US-A- 4 622 252
- US-A- 4 755 409

## Description

The present invention relates to a multi-reinforced thermo-adhesive bituminous composite membrane, consisting of two layers of bituminous mass, a composite reinforcement, a polypropylene silicon coated film applied on the lower side of the membrane, a protection reinforcement made from non-woven polypropylene yarns, applied on the upper side of the membrane, and a siliconised sheet for protection of the lateral overlapping, meant for road's hydroinsulation and reinforcement. The membrane can be used between the base layer and the attrition tarmac layer, both for rehabilitating the roads and for the execution of new roads.

There are known the crack-proof road inter layers and for reinforcing the road surfacing, consisting of an interwoven product of polyester fibers of the first use, in admixture with recycled polyester fibers impregnated with 350...400 grams/m2 of bitumen and covered with one layer of 50...100 grams/m2 chalk filler (RO117468).

The disadvantages of this method are in connection with the application, the phase of impregnation with bitumen following to the phase of laying the interwoven product which is not impregnated with bitumen from the fabrication. The layer formed in such way is not uniform and has a variable thickness. Such a rudimentary system of impregnation does not carry out deep impregnation of the interwoven product, there existing the risk of de lamination of the 2 layers. Also, the road surfacing hydro insulation is only partially solved because the used bitumen is in insufficient quantity to achieve a waterproofing layer, and the used bitumen non-additivated with elastoplastomers considerably reduces the expected effect. The used carrier is not guaranteed to the subsequent compression forces, the bitumen interwoven system can be perforated and thereby it can lose in this way the hydroinsulation characteristic. Thus, the water ascension from the base layer towards the upper attrition layer of the road surfacing, corroborated with the freezing-thawing effect will break the road surfacing. At the same time, the water accumulated in bad weather conditions will act at the level of the existent cracks, under the wheels pressure on the heavy traffic, producing the same phenomenon.

There are also known the nonwoven geotextiles against crack initiation, made of nonwoven continuous filaments of polyethylene terephtalate, impregnated with 300... 800 grams/m² of type 180/220 bitumen modified with slyrene/butadiene/styrene elastomers (GB 2 185 500A), or the composite membrane wherein the bitumen is modified with one of styrene-butadiene-rubber and styrene-butadiene-styrene. The problem of making a efficient waterproofing layer is not solved completely, since the used quantity of bitumen is not enough to form an uniform insulating layer. Moreover, the use of a bitumen modified only with styrene-butadiene-styrene will reduce its resistance to high temperatures during the pouring of the final layer of hot asphalt and then the use of a textile support without resistance to static loadings will have the effect of locally perforating the bituminous layer.

There are known the manufacturing and the use of a preformed membrane over the surface of the roads (U.S. Pat. 4, 464, 427) by using a bituminous mixture with linear and radial polystyrenic copolymers, applied onto a 50 cm width woven glass fibre to form a membrane having a thickness of 1,5 mm and being protected on the lower side by a siliconized paper. The disadvantage of the method is that the used woven glass fibre does not have cracks delaying effect, moreover the characteristics of the bituminous mixture indicate low softening point, respectively high penetration values, which constitute as a negative aspect looking at the conditions during the application.

There are also known the materials used as upper, respectively lower side finish, thus constituting as a temporarily protection of the bituminous layer and being removed before the application (U. S. Pat. 4, 755, 409 and 4, 446, 427), but as concerning the materials used to protect the lateral overlapping of the membranes, these are rather replaced with plastic film applied in fully adherence (U.S. Pat. 4, 622, 252). The disadvantage of the method is thus creating a separation layer between the two overlapps of the bituminous membranes and which in fact could cause the separation of the joint.

The technical problem which the invention solves consists in using one compact finite product, with multiple functions of hydroinsulating and at the same time of reinforcing the road, with an easy application. The membrane composition, and its bituminous mass respectively, ensures the road surfacing hydroinsulation, the membrane being perfectly compatible with the asphalt mass, and the structure and the reinforcement characteristics ensures the reinforcement and delays the cracks propagation in the upper or lower road layers.

The multi-reinforced thermo-adhesive composite bituminous membrane with elastoplastomers, according to the invention, obviates the disadvantages in that it is constituted from two bituminous layers, with the overall weight ranging between 2...6 kg/m2, one upper layer consisting of distilled bitumen with 120...200 dmm penetration, additivated with elastoplastomers, polyolefins and thermally active polymers, chalk filler, one lower layer consisting of distilled bitumen with 120...200 dmm penetration, additivated with 3 components such as with elastoplastomers, with styrene-butadiene-styrene-type polymers and with thermally active polymers as adherence accelerators, a composite reinforcement consisting of a composite mineral woven fabric, with the weight ranging between 80...220 grams/mp, with the tensile strength ranging from 1500...3000 N/5 cm and elongation of 2...4%, in duplex with a non-woven web of long polyester yarns, reinforced with longitudinal and/or transversal filaments of glass fibers having a weight of 90...220 grams/m2, impregnated with bituminous mass, additivated with agents for compatibility, a silicon coated polypropylene film applied on the membrane lower side, a protection reinforcement from a non-woven web made of polypropylene yarns, applied on the upper side of the membrane and a siliconised sheet for the protection of the lateral overlapping.

The advantages for this product are:
- it blocks the water ascension from the groundwater through the base layer towards the road surfacing attrition level. The water, by repeated freezing-thawing cycles deteriorates the road structure in time at the level of the region separating the two layers. It blocks the access of water accumulated inside the possible cracks in the attrition layer to the base layer of the road, under the pressure exerted by the cars wheels. The water can generate horizontal shearing stress or cracks cleavage strains. The system is thus constituted as a waterproof layer, giving the time to the foundation bed to sew the water and to the attrition layer to evacuate the water by evaporation.
- it reduces or blocks the cracks propagation from the road support layer to the attrition layer by taking over the stresses which exist between layers. The reinforcement used and specially designed for this product has special mechanical characteristics, particularly the strength characteristics and break elongation and static charge characteristics
- easy application and the membrane self-fixing by thermal adherence and easy superposition of lateral and end sides by the displacement of the protection siliconised film
- perfect cohesion inside the road surfacing structure due to the special composition of the bituminous mass and of the used thermally active additives
- the stability of shape and implicit composite membrane characteristics
- it reduces the working time, immediately after the adhering on the support layer the membrane permits the circulation of the asphalting equipments
There is given herein after an embodiment of the invention, in connection with:

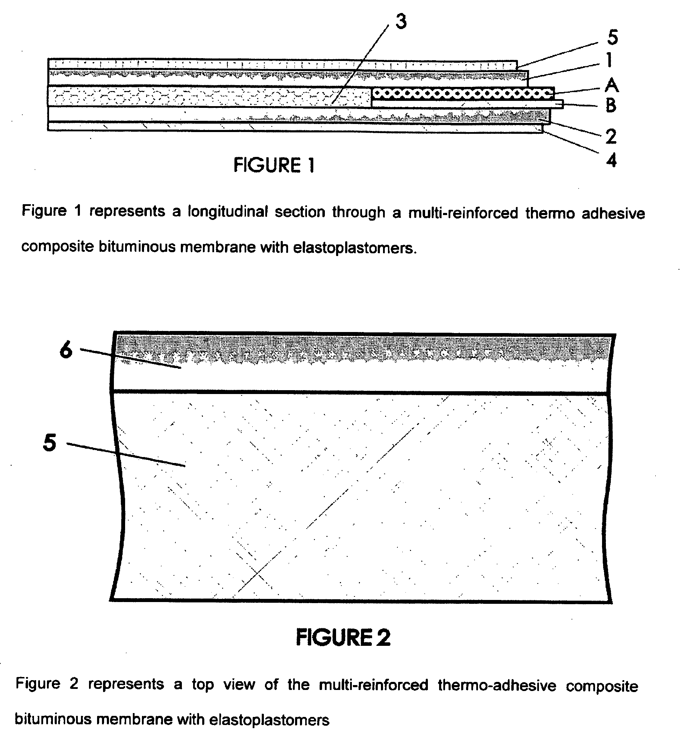

- **Figure 1**, which represents a longitudinal section through a multi-reinforced thermo adhesive composite bituminous membrane with elastoplastomers.
- **Figure 2****,** which represent a top view of the multi-reinforced thermo-adhesive composite bituminous membrane with elastoplastomers.

According to the invention the multi-reinforced thermo adhesive composite bituminous membrane with elastoplastomers, consists of the upper layer **1** which is a bituminous mass characterized by a particular resistance to high temperatures, also considering the work conditions with such a material, namely the form stability and the characteristics to pouring the mass of fresh asphalt. For obtaining a material resistant to high temperatures there will be used distilled bitumen with a 120...200 dmm penetration, additivated with elastoplastomers, virgin or regranulated polyolefins (5...30%), thermally active polymers as adherence accelerators (3...5%), chalk filler (10...15%), where the polyolefins have a stereo-regulated structure and by consequence a melting temperature above 130°C. The bituminous mass additivated in such a way will have a supplementary hardness, being resistant to the compression loads (road circulation) and especially at the temperature and the compression exerted by applying of the fresh asphalt mass across this system. The lower layer **2 ,** which will be in direct contact with the support, is particularly designed to facilitate the use of the membrane. The bituminous mass has a special composition, being constituted from distilled bitumen with a 120...200 dmm penetration, additivated with elastoplatomers, styrene-butadiene-styrene polymers and thermally active polymers as adherence accelerators (10...15%), where these additives have a network-type structure, which has bitumen particles inserted in its holes. By using these adherence additives, the membrane thermal adhesion between the base road layer and the attrition tarmac layer is achieved by the transmission of heat to the freshly poured asphalt mixture and the activation of the thermally adhesive additives. At the same time, these additives ensure an adhesivity at the environment temperature of the membrane to the support.

The composite reinforcement **3** used as carrier is a mineral composite woven fabric A, with the weight ranging from 80 to 220 grams/m2, tensile strength of 1500...3000 N/5 cm and elongation of 2...4%, in duplex with a woven-non-woven web from long polyester yarns, weight of 90...220 grams/m2, (B). The woven fabric polyester with long yarns has the advantage of uniform distribution of the shear as stress, but especially of conferring to the system a particular resistance to static and dynamic penetration, of 25...35 kg. These penetration forces can appear preponderantly in the rough milled region prepared to be asphalted, under the pressure of the compacting cylinders and trough the aggregates present in the bituminous mixture. In this way there is avoided the membrane penetration, which means practically the cancellation of the waterproofing function. The composite reinforcement **3** is constituted as a strength structure upon vertical static loading, at the same time taking over the shearing and elongation forces close to the cracks and reducing the cracks propagation on horizontal line. The cumulated resistance of the composite reinforcement has values between 30...60 KN/m. In this values range, the propagation of a crack is retarded by 100% in comparison with a system without reinforcement. The composite reinforcement **3** can be obtained from fabrication too, as interwoven laminate from the two individual types of support. This reinforcement is impregnated in depth with bituminous mass, additivated with compatibilization agents avoiding the de-lamination for the two membrane layers.

The propylene siliconised layer **4** is disposed on the lower side. This layer has a role of protection for the adherent membrane surface preventing the rollers from sticking together upon packaging and it can easily be detached before use. The protection reinforcement **5** is an non-woven web made from polypropylene yarns, with the weight of 20...60 grams/m2. The protection reinforcement **5** protects the membrane after application, allowing the circulation of the equipments and personnel. In the same time, by increasing the surface for contact and of the interwoven network, it increases the cohesion at the level of the particles between the bituminous membrane and the tarmac asphalt layer.

The siliconised sheet for protection of the lateral overlapping margin **6** has a width of 10...12 cm. This sheet has the role to protect the adhering surface of the membrane and can easily be detached before application.

**TECHNICAL CHARACTERISTICS OF THE MEMBRANE**

| | |
|---|---|
| Roller width | 1...4 mm |
| Roller Length | 5...30 m |
| Area mass | 2...6 kg/mp |
| Thickness of upper layer | 1...4 mm |
| Thickness of lower layer | 1...4 mm |
| Tensile Strength | 30...60 KN/m |
| Elongation at break | 2...4% |
| Area mass for the PP web | 20...60 g/mp |
| Area mass of the composite reinforcement | 170...440 g/mp |
| Melting point | ≥ 150°C |
| Static charge | 25...40 kg |

According to the invention the composite bituminous membrane is used both for the rehabilitation of destroyed road structures, and for designing and execution of new works. In case of roads rehabilitation, the attrition layer is removed by milling. The base layer is cleaned of wastes and it is primed with a bituminous primer, of 300...400 grams/m2. After drying the primer, the material rolls are unrolled on the longitudinal road direction. The siliconised sheet is removed from the lower side of the membrane while sticking the membrane by unwinding. The siliconised sheet is detached from the lateral overlapping and the next roll is applied by overlapping on 10 cm. In this way the entire working surface is insulated, the rolls being applied in an interwoven system. The semi adherence to the substrate of the material at the environment temperature will allow the circulation of the equipments and personnel without damaging the material. Then is applied the hot asphalt, the attrition layer, in a continuous process and they are compacted. The total thermal adherence will be achieved instantly, by transmitting the heat to asphalt through the material mass and by thermally activating additives in its composition. In case of carrying out new works, the membrane application is made by the same process, after the construction of the base road layer.

## Claims

1. Multi-reinforced thermally adhesive composite bituminous membrane with elastoplastomers for road's hydroinsulation and reinforcement, **characterized in that** is constituted from a succession of layers arranged as follows: one upper layer (1) made from distilled bitumen with 120...200 dmm penetration, additivated with 5...30% plastic elastomers and polyolefins of the first use or re-granulated, 3...5% thermally active polymers as adherence accelerators and 10...15% chalk filler, one composite reinforcement (3) made from composite mineral web (A) with the weight of 80...220 grams/m2, with resistance at break of 1500...3000 N/5 cm and elongation of 2...4%, in duplex with a woven-non-woven web from long yarns (B), reinforced with longitudinal and/or transversal filaments from glass fiber, with the weight of 90...220 grams/m2, impregnated in bituminous mass additivated with compatibilization agents, one lower layer (2) made from distilled bitumen with 120...200 dmm penetration, additivated with 10...15% plastic elastomers, with styrene-butadiene-styrene-type polymer and with thermally active polymers as adherence accelerators, the resulting assembly having some protection layers arranged as follows: one siliconised polypropylene sheet (4) applied on the membrane lower side, with a weight of 40...60 grams/m2, one permanent protection reinforcement (5) from non-woven web from polypropylene yarns applied on the upper side of the membrane, having a weight of 20...60 grams/m2, and a siliconised protection sheet of the lateral overlapping (6) with a width of 10...12 cm, the cumulated resistance of the composite reinforcement has values ranging between 30 and 60 KN/m.

2. Composite bituminous membrane for road's hydroinsulation and reinforcement, according to the claim 1, **characterized in that** consists of an upper layer (1) made from distilled bitumen with 120...200 dmm penetration, additivated with plastic elastomers, polyolefins of first use or re-granulated (5...30%), thermally active polymers as adherence accelerators (3...5%) and chalk filler (10...15%).

3. Composite bituminous membrane for road's hydroinsulation and reinforcement, according to the claim 1, **characterized in that** consist of an lower layer (2) which is made from distilled bitumen with 120...200 dmm penetration, additivated with elastoplastomers, with styrene-butadiene-styrene-type polymers and with thermally active polymers as adherence accelerators (10...15%).

4. Multi-reinforced bituminous membrane for road's hydroinsulation and reinforcement, according to the claim 1, **characterized in that** it has a composite mineral non-woven web (A) with the weight ranging between 80...220 grams/mp, with tensile strength of 1500...3000 N/5cm and elongation of 2...4%, in duplex with a non-woven web from long yarns (B), reinforced with longitudinal and/or transversal filaments of glass fiber, with the weight of 90...220 grams/mp, with the resistance at break values of 30...60 KN/m and with static charge values more than 25 kg.

5. Thermally adhesive bituminous membrane for road's hydroinsulation and reinforcement, according to the claim 1, **characterized in that** it is incorporating thermo actives additives as adherence accelerators, the thermal welding being made by the heat transmission of the asphaltic mass of the attrition layer and not by flame thermal welding.

6. Bituminous membrane for road's hydroinsulation and reinforcement, according to the claim 1, **characterized in that** the membrane is partially adhesive to the support at the environment temperature, allowing the equipment and for personnel circulation.

7. Bituminous membrane for road's hydroinsulation and reinforcement, according to claim 1, **characterized in that** it is provided with a siliconised polypropylene sheet (4) on the entire back surface and with silicon coated protection sheet of the lateral overlapping (6), having the role to protect the membrane adhering surface and which is detached before the application, facilitating the arranging of the membranes over the support.

8. Bituminous membrane for road's hydroinsulation and reinforcement, according to claim 1, **characterized in that** it is manufactured with one reinforcement for protection (5) at the upper side, formed from on non-woven web of polypropylene yarns, with the weight of 20...60 grams/mp, protecting in this way the membrane after application and facilitating the cohesion of particles in the poured asphalt mass with the membrane particles.

## Patentansprüche

1. Bituminöse Membran mit thermisch klebendem Mehr- Faserverbundwerkstoff und Elastoplastomern für Abdichtung und Verstärkung von Strassen, **gekennzeichnet** dabei dass sie aus einer Reihe von Schichten besteht wie folgt: eine Deckschicht (1) bestanden aus destilliertem Bitumen mit 120 ... 200 dmm Durchdringung, legiert mit 5...30% Kunstoffelastomer und Ersteinsatz- oder Regranulat - Polyolefine, 3....5% thermisch aktiver Polymere als Anhaftungsbeschleuniger und 10...15% Kalkfilter, eine Composit-Verstärkung (3) aus Compositmineraler Stegbewehrung (A) mit dem Gewicht von 80...220 Gramme/m2, mit einer Bruchsicherheit von 1500....3000 N/5 cm und Dehnung von 2...4% in einem Duplex mit einer gewebten-nicht-gewebten Stegbewehrung aus langen Garne (B), verstärkt mit Langsfaden und/oder Querfaden aus Glasfaser, mit einem Gewicht von 90...220 Gramme/m2, imprägniert in einer mit Passungsmittel legierten, bituminösen Masse, eine Unterschicht (2) bestanden aus destillierte Bitumen mit 120...200 dmm Durchdringung, legiert mit 10...15% Kunstoffelastomer, mit Styrol-Butadien-Styrol Typ Polymer und mit thermisch aktiver Polymere als Anhaftungsbeschleuniger, den resultierenden Einbau hat einige angeordneten Schutzschichten wie folgt: ein silikonisiertes Polypropylenblech (4) angelegt auf der Unterseite der Membran mit einem Gewicht von 40...60 Gramme/m2, eine beständige Schutzverstärkung (5) aus Vliesstegblech aus Polypropylengarne angelegt auf der Oberseite der Membran mit einem Gewicht von 20...60 Gramme/m2 und ein silikonisiertes Schutzblech von seitlicher Überlappung (6) mit einer Breite von 10...12 cm, die angesammelte Beständigkeit der Composit-Verstärkung hat Werten zwischen 30 und 60 KN/m.

2. Bituminöse Composit-Membran für Abdichtung und Verstärkung von Strassen gemäss dem Anspruch 1, **gekennzeichnet** als bestanden aus einer Deckschicht (1) destilliertem Bitumen mit 120 ... 200 dmm Durchdringung legiert mit 5...30% Kunstoffelastomer und Ersteinsatz- oder Regranulat - Polyolefine(5...30%), thermisch aktiver Polymere als Anhaftungsbeschleuniger (5...30%) und Kalkfilter (10...15%).

3. Bituminöse Composit-Membran für Abdichtung und Verstärkung von Strassen gemäss dem Anspruch 1, **gekennzeichnet** als eine Unterschicht (2) bestanden aus destillierte Bitumen mit 120...200 dmm Durchdringung, legiert mit Kunstoffelastomer mit Styrol-Butadien-Styrol Typ Polymer und mit thermisch aktiver Polymere als Anhaftungsbeschleuniger (10...15%).

4. Mehr- Faserverbundwerkstoff Bituminöse Membran für Abdichtung und Verstärkung von Strassen gemäss dem Anspruch 1, **gekennzeichnet** als dass sie ein gewebten-nicht-gewebten Stegbewehrung-Composit (A) mit einem Gewicht zwischen 80...220 Gramme/m2, mit Festigkeit von 1500...3000 N/5cm und Ausdehnung von 2...4% in einem Duplex aus langen Garne (B) hat, verstärkt mit Langsfaden und/oder Querfaden aus Glasfaser, mit einem Gewicht von 90...220 Gramme/m2 und mit Bruchsicherheitswerten von 30...60 KN/m und mit Werten der statischen Aufladung höher als 25 kg.

5. Thermisch klebende bituminöse Membran für Abdichtung und Verstärkung von Strassen gemäss dem Anspruch 1, **gekennzeichnet** als dass sie thermisch aktiven Polymere als Anhaftungsbeschleuniger einschliesst, das Warmeschweissen ist durch die Wärmeableitung der Asphaltdecke von dem Abnutzungsschicht ausgeführt und nicht durch die Schweißflamme.

6. Bituminöse Membran für Abdichtung und Verstärkung von Strassen gemäss dem Anspruch 1, **gekennzeichnet** als dass sie teilweise anklebend an der Abstützung der Umgebungstemperatur und sie ermöglicht, die Ausstattung und das Personal herumzugehen.

7. Bituminöse Membran für Abdichtung und Verstärkung von Strassen gemäss dem Anspruch 1, **gekennzeichnet** als dass sie mit einem silikonisierten Polypropylenblech (4) auf der ganzen Unterseite und mit Silizium-beschichtetem Schutzblech der seitlichen Überlappung (6) ausgerüstet ist, die die Rolle hat, die Membran die Anhaftunsgfläche zu schützen und die vor der Anwendung abgetrennt ist, so dass sie die Fertigung der Membrane uber die Abstützung ermöglicht.

8. Bituminöse Membran für Abdichtung und Verstärkung von Strassen gemäss dem Anspruch 1, **gekennzeichnet** als dass sie aus einer Verstärkung für die Schützung (5) auf der Oberseite hergestellt ist, aus Vliesstegblech aus Polypropylengarne mit einem Gewicht von 20...60 Gramme/m2 besteht und so die Membrane nach der Anwendung schützt und die Kohäsion der Partikel in der Gussasphaltmasse mit der Partikel der Membrane ermöglicht.

## Revendications

1. Membrane bitumineuse composite, avec des élastomères plastiques, thermo-adhésive et pluri-renforcée pour hydro isolation et renfort de l'asphalte routier, **caractérisée par le fait qu'**elle se compose d'une succession de couches disposées différemment: une couche supérieure (1) composée de bitume distillé avec pénétration 120...200 dmm, à qui on ajoute des additives en proportion de 5...30% élastomères plastiques et polyoléfines de première usage ou re-granulés, 3 ... 5% polymères actifs thermiquement comme accélérateurs d'adhérence et 10 - 15% craie de remplissage, renfort de composites (3) composé d'un tissu composite minérale (A) avec un poids de 80...220 grams/m², avec résistance au cassage et une élongation de 2...4%, doublé par un tissu non - tissé de 90...220 grams/m² imprégné en masse bitumineuse additivée avec agents de compatibilité, une couche inferieure (2) composée de bitume distillé avec pénétration 120...200 dmm, additivée avec 10...15% élastomères plastiques avec polymères de type styrènes et avec polymères actifs thermiquement comme accélérateurs d'adhérence l'ensemble résulté ayant quelques couches de protection disposées de la manière suivante: une feuille siliconée de polypropylène (4) appliquée sur la partie inferieure de la membrane, avec un poids de 40...60 grams/ m², un renforcement permanent (5) d'un tissu non -tissé de fibres de polypropylène appliqué sur la partie supérieure de la membrane, ayant un poids de 20 ...60 grams/m² et une feuille siliconée de protection du chevauchement latérale (6) avec une largeur de 10....12 cm. La résistance cumulée du renforcement composite a des valeurs entre 30...60KN/m.

2. Membrane bitumineuse composite pour hydro isolation et renfort de l'asphalte routier conformément à la demande 1, **caractérisée par** ce qu'elle se compose d' une couche supérieure (1) composé de bitume distillé avec pénétration 120...200 dmm, additivé avec élastomères plastiques et polyoléfines de première usage ou re-granulé (5...30%), polymères actifs thermiquement comme accélérateurs d'adhérence (3...5%) et craie de remplissage (10..15%).

3. Membrane bitumineuse composite pour hydro isolation et renfort de l'asphalte routier conformément à la demande 1, **caractérisée par** ce qu'elle se compose d' une couche supérieure (2) composé de bitume distillé avec pénétration 120...200 dmm, additivé avec élastomères plastiques et polymères de type styrène - butadiène -styrène et avec polymères actifs thermiquement comme accélérateurs d'adhérence (10..15%).

4. Membrane bitumineuse pluri- renforcée pour hydro isolation et renfort de l'asphalte routier conformément à la demande 1, **caractérisée par le fait qu'**elle se compose d'un tissu composite minérale (A), avec poids entre 80..220 grams/mp, avec résistance au cassage entre 1500....3000N/5cm et allongement de 2-4%, doublée par un tissu non -tisse de fibres longs (B), renforcée avec des fibres longitudinales et /ou transversales avec fibres de verre, avec un poids de 90...220 grams/mp, avec des valeurs de résistance au cassage entre 30...60 KN/m et avec des valeurs de charge statique plus grand que 25 kg.

5. Membrane bitumineuse thermo adhésive pour l'hydro isolation et renforcement d'asphalte routier conformément à la demande 1, **caractérisée par** ce qu'elle englobe des additifs actifs thermiquement comme accélérateurs d'adhérence, le thermo scellage se faisant par la transmission de la chaleur de la masse d'asphalte de la couche d'usure et non par thermo scellage avec flamme.

6. Membrane bitumineuse composite pour l'hydro isolation et renforcement de l'asphalte routier, **caractérisée par** ce que la membrane est adhésive partialement à l'appui à la chaleur ambiante, permettant la circulation des équipements et du personnel.

7. Membrane bitumineuse composite pour l'hydro isolation et renforcement d'asphalte routier conformément à la demande 1, **caractérisée par** ce qu'elle est prévue avec une feuille siliconée de polypropylène (4) sur la surface dorsale entière et avec une feuille siliconée de protection de chevauchement latéral (6) ayant le rôle de protéger la surface adhérente de la membrane et d' être arrachée avant l'application, facilitant la disposition des membranes sur l'appui.

8. Membrane bitumineuse composite pour l'hydro isolation et renforcement d'asphalte routier conformément à la demande 1, **caractérisée par** ce qu'elle possède de fabrication un renforcement de protection (5) à la partie supérieure, composée d'un tissu non -tissé de fibres de polypropylène, avec poids de 20 - 60 grams/mp, protégeant la membrane après l'application et facilitant la cohésion des particules de la masse asphaltique moulée avec celle de la membrane.
